# EUROPÄISCHE PATENTSCHRIFT

(11) **EP 1 103 880 B1**
(45) Veröffentlichungstag und Bekanntmachung des Hinweises auf die Patenterteilung: **22.01.2003**
(21) Anmeldenummer: 00121351.1
(22) Anmeldetag: 11.10.2000
(51) Int. Cl.: G05D 23/275, F24D 19/10, F02G 1/04, G05D 23/19

(54) **Stellantrieb**
Drive control
Control de mouvement

(30) Priorität: 16.11.1999 DE 19954916
(43) Veröffentlichungstag der Anmeldung: 30.05.2001
(73) Patentinhaber: Behr Thermot-tronik GmbH & Co., 70806 Kornwestheim (DE)
(72) Erfinder: Buschatz, Immanuel, 72669 Unterensingen (DE)
(74) Vertreter: Patentanwälte Ruff, Wilhelm, Beier, Dauster & Partner

(56) Entgegenhaltungen:
- DE-A- 3 217 415
- DE-A- 4 138 523
- US-A- 4 489 554

## Beschreibung

Die Erfindung betrifft einen Stellantrieb mit einem mittels eines Heizelementes elektrisch beheizbaren thermostatischen Arbeitselement, das ein einen Dehnstoff enthaltendes Gehäuse und einen daraus ausfahrbaren Arbeitskolben aufweist, und mit einer proportionalen Hubregelung für den Arbeitskolben.

Bei einem bekannten Stellantrieb der eingangs genannten Art (DE 41 38 523 A1) wird davon ausgegangen, daß sich der elektrische Widerstand des thermostatischen Arbeitselementes abhängig von der Volumensänderung des Dehnstoffes ebenfalls verändert, so daß dieser elektrische Widerstand als ein die Stellung des Arbeitskolbens repräsentierendes Signal bei der Regelung eingesetzt werden kann. Die Funktionsfähigkeit der Ausführungsbeispiele, mit denen ein sich mit der Volumensänderung des Dehnstoffes ändernder elektrischer Widerstand erfaßt werden soll, erscheinen mehr als fraglich.

Der Erfindung liegt die Aufgabe zugrunde, einen Stellantrieb der eingangs genannten Art zu schaffen, der eine sehr genaue Hubregelung für den Arbeitskolben ermöglicht.

Diese Aufgabe wird dadurch gelöst, daß eine Einrichtung zum Erfassen der Wegposition des Arbeitskolbens vorgesehen ist, die an eine Regelschaltung angeschlossen ist, welche die erfaßte IST-Position des Arbeitskolbens mit einer SOLL-Position vergleicht und abhängig von dem Ergebnis dieses Vergleichs die Zufuhr von elektrischer Energie zu dem Heizelement festlegt.

Aufgrund des Erfassens der Wegpositon des Arbeitskolbens ist eine sehr genaue Regelung möglich und insbesondere ein sehr genaues Anfahren von vorgewählten Positionen für den Arbeitskolben.

In weiterer Ausgestaltung der Erfindung wird vorgesehen, daß die Regelschaltung die Zufuhr von Impulspaketen eines Wechselstroms zu dem Heizelement steuert. Durch Bestromen des Heizelementes mit Impulspaketen unterschiedlicher Länge und dazwischenliegenden Pausen läßt sich eine einfache Regelung mit einem PID-Verhalten realisieren. Dabei ist es zweckmäßig, wenn die Öffnungstemperatur des Dehnstoffes, d.h. die Temperatur, in welcher der Dehnstoff seinen Aggregatzustand ändert, deutlich über der Umgebungstemperatur liegt, so daß eine relativ rasche Abkühlung erfolgt, wenn das Heizelement nicht bestromt wird.

In weiterer Ausgestaltung der Erfindung wird vorgesehen, daß die Regelschaltung mit Mitteln zum Erfassen und Abspeichern des maximalen Weges eines dem Stellantrieb zuordenbaren, zu verstellenden Elementes versehen ist. Damit ist es möglich, innerhalb der Regelschaltung den maximalen Weg des zu verstellenden Elementes, insbesondere eines Stößels eines Ventils zwischen der Öffnungsstellung und der Schließstellung, zu erfassen und die Sollwertsignale auf diesen maximalen Weg zu verteilen.

Bei einer baulich vorteilhaften Ausführungsform sind ein stationärer Grundkörper, in dem das Gehäuse des Arbeitselementes angeordnet ist, und ein von dem Arbeitskolben verstellbares Übertragungselement vorgesehen, die mit einem an dem Grundkörper angebrachten Außengehäuse umgeben sind, wobei die Einrichtung zum Erfassen der Wegposition des Arbeitskolbens zwischen dem Übertragungselement und dem Außengehäuse angeordnet ist. Dabei ist es weiter vorteilhaft, daß die Einrichtung zum Erfassen der Wegposition des Arbeitskolbens ein stationäres, an dem Außengehäuse angebrachtes Element und ein sich mit dem Arbeitskolben und dem Übertragungselement mitbewegendes Element enthält. Diese Elementes sind geschützt innerhalb des Außengehäuses angeordnet und gewährleisten dennoch eine einwandfreie Funktion.

In weiterer Ausgestaltung der Erfindung wird vorgesehen, daß das sich mit dem Arbeitskolben bewegende Element auf einer. Platine angeordnet ist, die an dem Übertragungselement angebracht ist. Dabei ist es besonders vorteilhaft, wenn in weiterer Ausgestaltung der Erfindung die Platine mit den Elementen der Regelschaltung versehen ist.

Weitere Merkmale und Vorteile der Erfindung ergeben sich aus der nachfolgenden Beschreibung der in den Zeichnungen dargestellten Ausführungsform.
- Fig. 1: zeigt in schematischer Darstellung einen erfindungsgemäßen Stellantrieb und
- Fig. 2: einen axialen Schnitt durch ein Ausführungsbeispiel eines Stellantriebes, der an einem Durchflußventil angebracht ist.

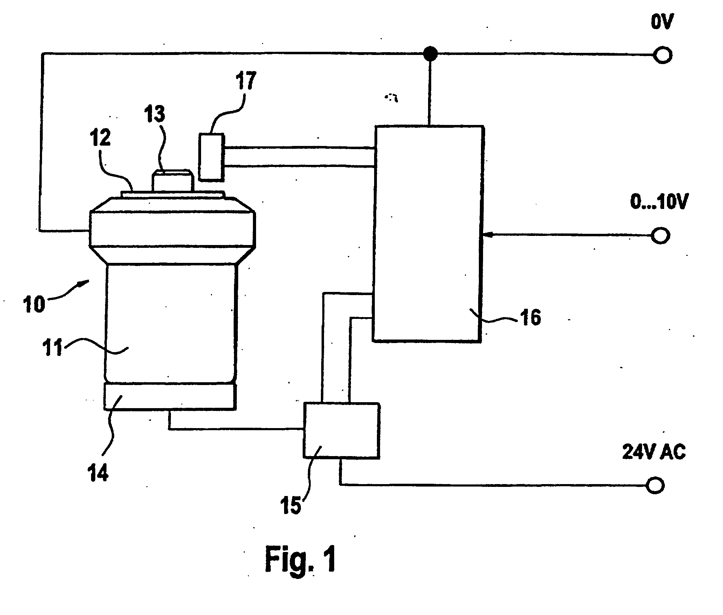

Das in Fig. 1 dargestellte thermostatische Arbeitselement 10 besitzt ein Gehäuse 11 aus Metall, in welchem ein Dehnstoff untergebracht ist, insbesondere eine Wachsmischung. In das offene Ende des Gehäuses 11 ist ein Führungseinsatz 12 eingebördelt, der einen Arbeitskolben 13 führt. Der Arbeitskolben 13 ist gegenüber dem Innenraum des Gehäuses 11 und damit gegenüber dem den Dehnstoff enthaltenden Raum mittels einer sackartigen Membran abgedichtet, die mittels des Führungseinsatzes 12 dichtend im Bereich des oberen Randes des Gehäuses 11 gehalten ist.

An dem Boden des Gehäuses 11 liegt ein elektrischer Heizwiderstand 14 an, insbesondere ein PTC-Widerstand. Mittels dieses Heizwiderstandes 14 ist das thermostatische Arbeitselement 10 so aufheizbar, daß der Dehnstoff sein Volumen vergröβert und dabei den Arbeitskolben 13 entsprechend seiner Volumensvergrößerung aus dem Gehäuse 11 austreibt. Die Arbeitstemperatur des Dehnstoffes, insbesondere die Temperatur, bei welcher er seinen Aggregatzustand ändert, ist so hoch gegenüber der Umgebungstemperatur festgelegt, daß nach einem Abschalten des elektrischen Heizwiderstandes 14 eine rasche Abkühlung erfolgt. Wenn das thermostatische Arbeitselement 10 bei Raumtemperatur als Umgebungstemperatur eingesetzt wird, wird die Ansprechtemperatur beispielsweise auf 70°C festgelegt.

Der elektrische Heizwiderstand 14 ist an eine Wechselstromquelle von 24Volt angeschlossen. In der Zuführung ist beispielsweise ein Triac 15 angeordnet, über welches der Heizwiderstand 14 mit elektrischer Energie in Form von Impulspaketen versorgt wird.

Das Triac 15 wird von einem Controller 16 angesteuert, der eine Regelschaltung bildet. An den Controller 16 ist ferner eine Einrichtung 17 zum Erfassen der Wegposition des Arbeitskolbens 13 angeschlossen. Die Einrichtung 17 zum Erfassen der Wegposition des Arbeitskolbens 13 gibt ein Signal an den Controller 16, das die IST-Position des Arbeitskolbens 13 repräsentiert. Diese IST-Position des Arbeitskolbens wird von dem Controller 16 mit einer SOLL-Position verglichen. Bei Abweichungen schaltet der Controller 16 das Triac 15 so, daß es entweder Impulspakete zu dem Heizwiderstand 14 durchläßt oder die Stromversorgung zu dem Heizwiderstand 14 absperrt.

Die SOLL-Positionen für den Arbeitskolben 13 werden in den Controller als Gleichspannungswerte zwischen 0Volt und 10Volt eingegeben.

Diese Spannungssignale werden innerhalb der Regelschaltung in Wegsignale umgewandelt, die den maximalen Verstellweg des zu verstellenden Elementes repräsentieren, beispielsweise eines Ventilkolbens. Hierzu wird zunächst der elektrische Heizwiderstand 14 über eine ausreichend lange Zeitspanne mit Strom (Impulspaketen) versorgt, so daß der Arbeitskolben 13 ausfährt. Wenn der Arbeitskolben 13 beispielsweise ein Ventilelement bei seinem Ausfahren in die Schließstellung bringt, so wird die Wegposition festgehalten, zu welcher sich der Arbeitskolben 13 nicht mehr weiter ausfahren läßt. Wird beispielsweise das Arbeitselement 10 so eingesetzt, daß der ausfahrende Arbeitskolben 13 einen Ventilstößel in seine Öffnungsposition folgen läßt, so wird die Wegposition des Arbeitskolbens 13 erfaßt, in welcher das zu verstellende Element (Ventilkolben) dem Arbeitskolben 13 nicht mehr weiterfolgt.

Danach wird die Stromzufuhr zu dem Heizwiderstand 14 über eine ausreichend lange Zeit unterbrochen, daß das Arbeitselement 10 bis zur Umgebungstemperatur abkühlen kann. Der Dehnstoff innerhalb des Gehäuses 11 kühlt ab und reduziert sein Volumen. Der Arbeitskolben 13 wird mittels einer in Fig. 1 nicht dargestellten Rückstellfeder in das Gehäuse 11 zurückgedrängt. Dabei wird die Wegposition des Arbeitskolbens erfaßt, in welcher der Arbeitskolben sich nicht mehr weiterbewegt (beispielsweise wegen geschlossenem Ventil) oder in welcher das zu verstellende Element dem Arbeitskolben 13 nicht mehr folgt. Auf den so erfaßten maximalen Weg wird der gesamte Spannungsbereich von 0Volt bis 10Volt in gleichmäßiger Weise verteilt. Bei einem Gesamtweg von 2,5mm entspricht dann eine Stufe von einem Volt 0,25mm. Aufgrund der Erfassung des maximalen Weges des zu verstellenden Elementes ist der Stellantrieb in einfacher Weise an unterschiedlich große Wege des Verstellelementes anpaßbar. Diese Anpassung wird zweckmäßig bei dem erstmaligen Anlegen der Spannung sowie nach jeder Spannungsunterbrechung neu vorgenommen.

Die Einrichtung 17 zum Messen der Wegposition des Arbeitskolbens 13 kann nach sehr unterschiedlichen Verfahren arbeiten. Beispielsweise kann die Einrichtung unter Ausnutzung des Halleffekts mittels eines Magnetfeldsensors, oder unter Ausnutzung der Kapazitätsänderung eines Kondensators oder magnetoresistiv oder als System nach dem Wiegand-Effekt oder nach einem optischen Verfahren mittels aufgebrachter und erfaßbarer Markierungen arbeiten. Bevorzugt wird jedoch ein System, bei welchem ein Ferritstab in eine Spule eintaucht, an die eine Spannung angelegt ist. Die Eintauchlänge des Ferritstabes führt zu einer erfaßbaren Induktivitätsänderung, die die Wegänderung oder die Wegposition repräsentiert.

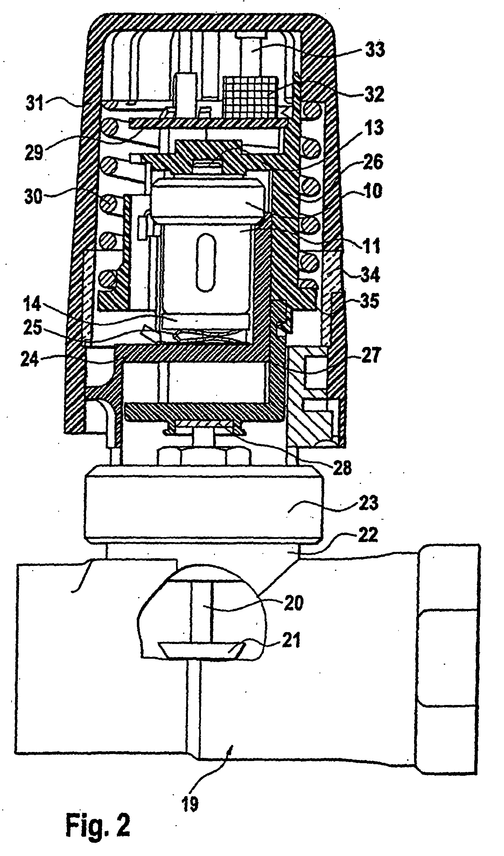

In dem Ausführungsbeispiel nach Fig. 2 ist ein erfindungsgemäßer Stellantrieb dargestellt, der zum Einstellen des Strömungsquerschnittes eines Ventils 19 dient. Das Ventil 19 besitzt einen Ventilstößel 20, der einen Ventilteller 21 trägt, der in nicht näher dargestellter Weise einem Ventilsitz zugeordnet ist. Bei dem Ausführungsbeispiel ist beispielsweise vorgesehen, daß der Ventilstößel 20 mit einer nicht dargestellten Öffnungsfeder belastet ist, die das Ventil 19 öffnet, wenn keine äußere Belastung auf den Ventilstößel 20 wirkt.

Das Ventil 19 ist mit einem Anschluß 22 versehen, aus welchem der Ventilstößel 20 dichtend herausgeführt ist. An diesem Anschluß 22 ist der Stellantrieb mittels einer Überwurfmutter 23 angebracht. Der Stellantrieb, der entsprechend der DE 19 705 721 aufgebaut ist, besitzt einen mit der Überwurfmutter 23 an dem Anschluß 22 stationär gehaltenen Grundkörper 24. Der Grundkörper 24 nimmt, wie es in der DE 19 705 721 A1 geschildert ist, das Gehäuse 11 des thermostatischen Arbeitselementes 10 auf. Der elektrische Heizwiderstand 14 ist mittels einer Feder 25 gegen den Boden des Gehäuses 11 angedrückt. Der aus dem Gehäuse 11 auf der dem Stößel 20 gegenüberliegenden Seite ausfahrbare Arbeitskolben wirkt auf ein zweiteiliges Übertragungsglied 26, 27, das den Grundkörper 24 durchdringt und mittels einer Druckplatte 28 eine Anlagefläche für den Ventilstößel 20 bildet.

Wenn der elektrische Heizwiderstand 14 bestromt wird und dadurch der in dem Gehäuse 11 vorhandene Dehnstoff auf seine Arbeitstemperatur erwärmt wird, so fährt der Arbeitskolben 13 aus dem Gehäuse 11 aus. Dabei nimmt er das zweiteilige Übertrgungselement 26, 27 mit, so daß der Ventilstößel 20 aufgrund der Öffnungsfeder des Ventils 19 der Druckplatte 28 folgt. Das Teil 26 des Übertragungselementes ist mit einer Rückstellfeder 30 belastet, die zwischen dem Teil 26 und einem Außengehäuse 31 angeordnet und auf einen vorgegebenen Wert vorgespannt ist. Die Rückstellfeder 30 ist so bemessen, daß sie bei Erkalten des Dehnstoffes des thermostatischen Arbeitselementes den Arbeitskolben 13 in das Gehäuse 11 zurück drückt und dabei auch den Ventilteller 21 über den Ventilstößel 20 in seine Schließstellung überführt. Die Rückstellfeder 30 muß deshalb kräftiger ausgelegt sein als die nicht dargestellte Öffnungsfeder des Ventils 19.

Auf der dem Arbeitskolben 13 abgewandten Endseite des Teils 26 des Übertragungselementes ist eine Platine 29 angebracht. Diese Platine 29 trägt eine Spule 32, in die ein an der Innenfläche der Abschlußstirnwand des Außengehäuses 31 befestigter Ferritstab 33 eintaucht, der stationär angeordnet ist, da das Außengehäuse 31 fest mit dem Grundkörper 24 verbunden ist, insbesondere durch Verrastung und/oder Verklebung oder Verschweißung.

Auf der Platine 29 werden zweckmäßigerweise auch die übrigen Elemente der Regelschaltung angeordnet, insbesondere der Controller und das Triac.

In das Außengehäuse 31 ist ein Fenster 34 aus durchsichtigem oder transparentem Material eingesetzt, das dem Ringbund 35 des Teils 26 des Übertragungselementes gegenüberliegt, auf welchem sich die Rückstellfeder 30 abstützt. Dadurch ist es möglich, von außen zu erkennen, welche Position der Stellantrieb eingenommen hat, und auch, ob der Stellantrieb funktioniert.

## Patentansprüche

1. Stellantrieb mit einem mittels eines Heizelementes elektrisch beheizbaren thermostatischen Arbeitselement, das ein einen Dehnstoff enthaltendes Gehäuse und einen daraus ausfahrbaren Arbeitskolben aufweist, und mit einer proportionalen Hubregelung für den Arbeitskolben, **dadurch gekennzeichnet, daß** eine Einrichtung (17) zum Erfassen der Wegposition des Arbeitskolbens (13) vorgesehen ist, die an eine Regelschaltung (16) angeschlossen ist, die die erfaßte IST-Position des Arbeitskolbens mit einer SOLL-Position vergleicht und abhängig von dem Ergebnis dieses Vergleichs die Zufuhr von elektrischer Energie zu dem Heizelement (14) festlegt.

2. Stellantrieb nach Anspruch 1, **dadurch gekennzeichnet, daß** die Regelschaltung (16) die Zufuhr von Impulspaketen eines Wechselstroms zu dem Heizelement (14) steuert.

3. Stellantrieb nach Anspruch 1 oder 2, **dadurch gekennzeichnet, daß** die Regelschaltung (16) mit Mitteln zum Erfassen und Abspeichern des maximalen Weges eines dem Stellantrieb zuordenbaren, zu verstellenden Elementes (20) versehen ist.

4. Stellantrieb nach einem der Ansprüche 1 bis 3, **dadurch gekennzeichnet, daß** ein stationärer Grundkörper (24), in dem das Gehäuse (11) des Arbeitselementes (10) angeordnet ist, und ein von dem Arbeitskolben (13) verstellbares Übertragungselement (26, 27) vorgesehen sind, die mit einem an dem Grundkörper angebrachten Außengehäuse (31) umgeben sind, und daß die Einrichtung (17) zum Erfassen der Wegposition des Arbeitskolbens (13) zwischen dem Übertragungselement und dem Außengehäuse oder dem Grundkörper (24) angeordnet ist.

5. Stellantrieb nach Anspruch 4, **dadurch gekennzeichnet, daß** die Einrichtung zum Erfassen der Wegposition des Arbeitskolbens ein stationäres, an dem Außengehäuse (31) oder dem Grundkörper (24) angebrachtes Element (33) und ein sich mit dem Arbeitskolben (13) und dem Übertragungselement (26, 27) mitbewegendes Element (32) enthält.

6. Stellantrieb nach Anspruch 5, **dadurch gekennzeichnet, daß** das sich mit dem Arbeitskolben (13) mitbewegende Element (32) auf einer Platine (29) angeordnet ist, die an dem Übertragungselemernt (26, 27) angebracht ist.

7. Stellantrieb nach Anspruch 6, **dadurch gekennzeichnet, daß** die Platine (29) mit den Elementen (15, 16, 17) der Regelschaltung versehen ist.

## Claims

1. An adjustment drive with a thermostatic work element, heated electrically with a heating element, which has a casing containing a stretchable substance and a work piston which can be extended from the casing and which has a proportional stroke control for the work piston, **characterized in that** a device (17) for recording the path position of the work piston (13) is provided, which is connected to a control circuit (16), wherein this device compares the measured actual position of the work piston with a set position and adjusts the supply of electric energy to the heating element (14) depending on the result of these comparisons.

2. An adjustment drive according to claim 1, **characterized in that** the control circuit (16) controls the supply of impulse packages of an alternating current to the heating element (14).

3. An adjustment drive according to claim 1 or 2, **characterized in that** the control circuit (16) has means for measuring and recording the maximum path of an element (20), assigned to the adjustment drive, which is to be adjusted.

4. An adjustment drive according one of claims 1 to 3, **characterized in that** a stationary base body (24) in which the casing (11) of the work element (10) is located and a transmission element (26, 27), which can be adjusted by the work piston (13), are provided, wherein these elements are surrounded by an outer casing (31), and wherein the device (17) for recording the path position of the work piston (13) is located between the transmission element and the outer casing or the base body (24).

5. An adjustment drive according to claim 4, **characterized in that** the device for recording the path position of the work piston contains a stationary element (33), which is attached to the outer casing (31) or the base body (24), and an element (32), which moves along with the work piston (13) and the transmission element (26, 27).

6. An adjustment drive according to claim 5, **characterized in that** the element (32) moving along with the work piston (13) is located on a circuit board (29), which is attached to the transmission element (26, 27).

7. An adjustment drive according to claim 6, **characterized in that** the circuit board (29) is equipped with the elements (15, 16, 17) of the control circuit.

## Revendications

1. Actionneur comportant un élément de travail thermostatique qui peut être chauffé à l'aide d'un élément de chauffage électrique, possédant un boîtier contenant une matière expansible et un piston de travail mobile, comportant une régulation proportionnelle du déplacement du piston de travail, **caractérisé par le fait qu'**un dispositif (17) de détection de la position de la course du piston de travail (13) est prévu, lequel est connecté à une boucle de régulation (16) qui compare la position REELLE du piston de travail à une position de CONSIGNE et qui, en fonction du résultat de cette comparaison, détermine l'alimentation de l'élément de chauffage (14) en énergie électrique.

2. Actionneur selon la revendication 1, **caractérisé par le fait que** le circuit de régulation (16) commande l'alimentation de l'élément de chauffage (14) par paquets d'impulsions d'un courant alternatif.

3. Actionneur selon les revendications 1 ou 2, **caractérisé par le fait que** le circuit de régulation (16) est pourvu de moyens pour détecter et enregistrer la course maximale d'un élément (20) réglable et attribuable à l'actionneur.

4. Actionneur selon une des revendications 1 à 3, **caractérisé par le fait qu'**un corps de base stationnaire (24) est prévu dans lequel est disposé le boîtier (11) de l'élément de travail (10) ainsi qu'un élément de transmission (26, 27) réglable par le piston de travail (13), lesquels sont entourés d'un carter extérieur (31) monté sur le corps de base, et que le dispositif (17) pour la détection de la position de la course du piston de travail (13) est disposé entre l'organe de transmission et le carter extérieur ou le corps de base (24).

5. Actionneur selon la revendication 4, **caractérisé par le fait que** le dispositif de détection de la position de la course du piston de travail contient un élément stationnaire (33) monté sur le carter extérieur (31) ou le corps de base (24), ainsi qu'un élément (32) mobile se déplaçant avec le piston de travail (13) et l'élément de transmission (26, 27).

6. Actionneur selon la revendication 5, **caractérisé par le fait que** l'élément (32) qui se déplace avec le piston de travail (13) est disposé sur une platine (29) montée sur l'élément de transmission (26, 27).

7. Actionneur selon la revendication 6, **caractérisé par le fait que** la platine (29) est pourvue des éléments (15, 16, 17) du circuit de régulation.
